# EUROPÄISCHE PATENTSCHRIFT

(11) **EP 3 665 104 B1**
(45) Veröffentlichungstag und Bekanntmachung des Hinweises auf die Patenterteilung: **16.10.2024**
(21) Anmeldenummer: 18759238.1
(22) Anmeldetag: 06.08.2018
(51) Int. Cl.: B65G 1/137

(54) **HÄNGEFÖRDERSYSTEM ZUM SORTIEREN VON PRODUKTEN UND VERFAHREN**
OVERHEAD CONVEYOR SYSTEM FOR SORTING PRODUCTS AND METHOD
CONVOYEUR AÉRIEN POUR LE TRI DE PRODUITS ET PROCÉDÉ

(30) Priorität: 08.08.2017 AT 506612017
(43) Veröffentlichungstag der Anmeldung: 17.06.2020
(73) Patentinhaber: Knapp AG, 8075 Hart bei Graz (AT)
(72) Erfinder: MATHI, Franz, 8075 Hart bei Graz (AT); SÜSS, Heiko, 8075 Hart bei Graz (AT); ELEBRACHT, Doris, 33619 Bielefeld (DE); SCHNADWINKEL, Thomas, 33619 Bielefeld (DE); WEND, Michael, 33619 Bielefeld (DE)
(74) Vertreter: Röggla, Harald
(86) Internationale Anmeldenummer: PCT/AT2018/060178
(87) Internationale Veröffentlichungsnummer: WO 2019/028485

(56) Entgegenhaltungen:
- EP-A1- 0 516 970
- EP-A1- 1 429 272
- WO-A2-2006/029212
- DE-U1- 20 103 664
- US-A- 3 776 395
- US-A1- 2009 242 356
- US-A1- 2012 216 917
- US-B1- 9 630 751

## Beschreibung

Die Erfindung betrifft ein Hängefördersystem zum Sortieren von Produkten aufweisend eine Vielzahl von Fördertaschen für zumindest ein Produkt, wobei die Fördertaschen entlang eines kontinuierlichen geschlossenen Förderwegs bewegbar sind, wobei das Hängefördersystem Fördermittel, die zum Bewegen der Fördertaschen ausgebildet sind, zumindest eine Beladequelle, die zum Beladen der Fördertaschen mit zumindest einem Produkt ausgebildet ist, eine Steuereinheit, die zum Steuern der Fördermittel ausgebildet ist, und zumindest eine erste Entladelinie mit einer Vielzahl von Entladepositionen entlang eines ersten geschlossenen Förderwegs aufweist.

Weiters betrifft die Erfindung ein Verfahren zum Sortieren von Produkten entlang eines kontinuierlichen geschlossenen Förderwegs mit einem Hängefördersystem, das eine Vielzahl von Fördertaschen für zumindest ein Produkt aufweist, aufweisend die folgenden Verfahrensschritte:
- Automatisches oder Manuelles Beladen einer Fördertasche mit zumindest einem Produkt an einer Beladequelle;
- Bewegen der Fördertasche mittels Fördermittel und Ansteuern zumindest einer gewünschten Entladeposition mittels einer Steuereinheit, welche zumindest eine Entladeposition entlang einer Entladelinie angeordnet ist; und
- Ablegen des zumindest einen Produkts an der gewünschten Entladeposition.

Das Dokument DE 602 20 273 T2 offenbart ein System zum Sortieren von Artikeln entlang eines geschlossenen kreislauf- oder schleifenartigen Förderwegs. Bei derartigen Sortiersystemen werden die Artikel von Transporteinheiten aufgenommen und durch Fördermittel entlang des Förderwegs bewegt. Die Transporteinheiten, die üblicherweise als Querbänder oder Kippschalen ausgeführt sind, befinden sich dabei in voneinander abhängiger Reihenfolge an einer festgelegten Position der Fördermittel. Die Artikel werden den Transporteinheiten an Zuführstationen zugeführt, wobei an einer Zuführstation immer nur ein Produkt nach dem anderen zugeführt werden kann. Selbst wenn mehrere Zuführstationen realisiert werden, kann der Durchsatz des Systems nicht merklich verbessert werden, solange nicht zwischen oder nach den Zuführstationen eine Vielzahl von Entnahmestationen entlang des Förderwegs angeordnet sind, um zu ermöglichen, dass zumindest einige der Transporteinheiten entladen werden können. Die Entnahmestationen können je nach Sortiersystem bis zu 50 Prozent des Gesamtinvestments in die Mechanik und bis zu zwei Drittel des Flächenverbrauchs ausmachen. Weiters haben die Entnahmestationen und deren Gestaltung einen wesentlichen Einfluss auf die Leistungsfähigkeit des Gesamtsystems.

Ein weiterer Nachteil der bekannten Systeme ist, dass bei hohem Durchsatz die notwendige Fördergeschwindigkeit der Fördermittel zu Fliehkräften führt, welche die Zuführung und die Entnahme der Produkte, insbesondere bei Querbändern oder Kippschalen, nachteilig beeinflussen. Seitlich entlang des Förderwegs angeordnete Zuführ- und Entnahmestationen sind deshalb nur bis zu einer begrenzenden Fördergeschwindigkeit möglich, da sonst keine korrekte Zuordnung mit der Transporteinheit mehr möglich ist oder die Produkte beim Ablegen Schaden nehmen können.

Das Dokument WO 2006/029212 A2 offenbart eine Förder-/ Sortieranlage umfassend einen geschlossenen Hauptförderweg mit bewegbaren Kassetten. Artikel können über eine Zuführstation in die Kassetten abgelegt und von dort direkt oder über Puffermodule in förderbare Behälter kommissioniert werden.

Der Erfindung liegt die Aufgabe zugrunde ein System und ein Verfahren zum Sortieren von Produkten mit hohem Durchsatz entlang eines kontinuierlich geschlossenen Förderwegs bereitzustellen, bei dem die oben genannten Nachteile zumindest vermindert sind.

Erfindungsgemäß wird diese Aufgabestellung durch Bereitstellen eines Hängefördersystems gelöst, gekennzeichnet durch zumindest eine weitere Entladelinie mit einer Vielzahl von Entladepositionen, die entlang zumindest eines weiteren geschlossenen Förderwegs angeordnet ist, wobei die zumindest zwei geschlossenen Förderwege über zumindest zwei Weichen miteinander verbunden sind, wobei die Fördertaschen in Bezug auf den Förderweg mittels der Fördermittel unabhängig voneinander steuerbar sind.

Diese Aufgabenstellung wird mit einem Verfahren gelöst, wobei die Entladelinie entlang eines geschlossenen Förderwegs angeordnet ist, der über zumindest zwei Weichen führt, wobei in einem Betriebszustand die Fördertasche entlang der Entladelinie in Bezug auf eine vertikale Achse über die gewünschte Entladeposition gesteuert wird und das Produkt mittels Schwerkraft aus der Fördertasche in die gewünschte Entladeposition automatisch und positionsgenau abgegeben wird.

Das erfindungsgemäße Hängefördersystem ermöglicht vorteilhaft, dass eine Vielzahl von Entnahmepositionen entlang des geschlossenen Förderwegs angeordnet sind und gleichzeitig der Flächenverbrauch und das Gesamtinvestment verringert werden können. Zusätzlich wird die Flexibilität in Bezug auf die Gestaltung der Entnahmepositionen und somit des gesamten Hängefördersystems erhöht. Durch die erfindungsgemäße Anwendung von Fördertaschen, die in Bezug auf den Förderweg selbst über Weichen hinweg mit hoher Fördergeschwindigkeit unabhängig voneinander steuerbar und bewegbar sind, kann vorteilhaft der Durchsatz der Sortierung erhöht werden, wobei die korrekte Zuordnung der Produkte zu jedem Zeitpunkt erhalten bleibt.

Bevorzugt ist der erste geschlossene Förderweg als Hauptschleife und jeder weitere geschlossene Förderweg als Nebenschleife ausgebildet, wobei zumindest eine Nebenschleife über eine Weiche von der Hauptschleife abzweigt und über eine Weiche in die Hauptschleife einmündet. Hierdurch ist vorteilhaft eine platzsparende, einfache und übersichtliche Anordnung der Entladelinien möglich.

Sind in weiterer Folge zumindest zwei weitere, vorzugsweise im Wesentlichen parallel angeordnete, Entladelinien entlang geschlossener Förderwege als Nebenschleifen ausgebildet, wobei zumindest eine Nebenschleife über eine Weiche von einer anderen Nebenschleife abzweigt und über eine Weiche in diese Nebenschleife einmündet, lassen sich hierdurch vorteilhaft eine große Anzahl an unterschiedlichen Gestaltungen der Entnahmepositionen realisieren. Zusätzlich lassen sich Unterteilungen einzelner Entladelinien ausbilden, beispielsweise um innerhalb der Entladelinien eine Produktsortierung zu ermöglichen. Es kann eine im Wesentlichen unbegrenzte Anzahl Entladelinien entlang geschlossener Förderwege, die vorzugsweise als Nebenschleifen ausgebildet sind, angeordnet sein.

Bevorzugt weisen die erfindungsgemäßen Fördertaschen Identifikationsmittel auf, insbesondere RFID-Chips. Hierdurch ist jede Fördertasche und somit grundsätzlich jedes Produkt jederzeit identifizierbar, wodurch die Fehleranfälligkeit des Hängefördersystems und des zugehörigen Verfahrens drastisch reduziert wird.

In einer bevorzugten Ausgestaltung weist das Hängefördersystem zumindest ein Lagerkarussell zum Zwischenlagern leerer oder beladener Fördertaschen auf. Hierdurch ist der Vorteil erhalten, dass eine besonders platzsparende und übersichtliche Möglichkeit der automatischen Zwischenlagerung und/ oder Pufferspeicherung ermöglicht ist.

In einer bevorzugten Ausgestaltung weist das Hängefördersystem zumindest einen Matrixsorter zum Sortieren der Fördertaschen in eine gewünschte Reihenfolge auf.

In einer besonders bevorzugten Ausgestaltung ist das Lagerkarussell entlang einer Nebenschleife angeordnet und/ oder ist der Matrixsorter entlang einer Nebenschleife angeordnet, wobei jede Nebenschleife über Weichen von der Hauptschleife abzweigt und in die Hauptschleife einmündet. Hierdurch ist vorteilhaft eine platzsparende, einfache und übersichtliche Anordnung von Lagerkarussell und/ oder Matrixsorter möglich.

In einer besonders bevorzugten Ausgestaltung sind im Betriebszustand die Fördermittel im Bereich der Beladequelle in Bezug auf die lotrechte vertikale Achse unterhalb zumindest einer Beladeposition angeordnet, wodurch jedes Produkt mittels Schwerkraft automatisch oder manuell und positionsgenau in eine beliebige oder gewünschte Fördertasche abgebbar ist. Somit kann die komplette Sortierung vom Beladen bis zum Entnehmen des Produkts vollkommen automatisch erfolgen, was den Durchsatz erhöht und die Fehleranfälligkeit sowie die Kosten reduziert.

Die Fördertaschen sind vorzugsweise automatisch verschließ- und öffenbar ausgebildet. Hierbei hat es sich in einer bevorzugten Ausgestaltung als vorteilhaft erweisen, dass im Betriebszustand die Fördermittel entlang der Entladelinien in Bezug auf eine lotrechte vertikale Achse oberhalb der Entladepositionen angeordnet sind, wodurch jedes Produkt mittels Schwerkraft automatisch und positionsgenau aus der Fördertasche in eine beliebige Entladeposition oder in eine gewünschte Entladeposition abgebbar ist. Bei entsprechender Gestaltung von Fördermittel, Fördertasche und Entladeposition kann weiters die Wahrscheinlichkeit reduziert werden, dass das Produkt beim Ablegen Schaden nimmt.

Vorzugsweise sind die Entladepositionen in den Entladelinien beweglich, beispielsweise als Behälter, ausgebildet. Hierdurch kann der Abtransport der entladenen Produkte vorteilhaft automatisiert und beschleunigt werden, insbesondere wenn zusätzlich ein Entladesteuersystem vorgesehen ist, das dazu ausgebildet ist die beweglichen Entladepositionen unterhalb der Entladelinien zu positionieren und/ oder mittels einem Entladepositionsfördermittel, beispielsweise einem Förderband, zu bewegen.

Besonders vorzugsweise ist hierbei das Hängefördersystem zum Abgeben der Produkte in sich bewegende Entladepositionen ausgebildet, wobei die Bewegungsrichtung der Entladepositionen vorzugsweise gleichläufig oder gegenläufig mit dem Förderweg der Entladelinien ist. Die beweglichen Entladepositionen, beispielsweise die Behälter, können dann mittels dem Entladepositionsfördermittel, beispielsweise dem Förderband, unterhalb der Entladelinien entlangbewegt werden und die Produkte können automatisch in die entsprechenden beweglichen Entladepositionen abgegeben werden.

In einer weiteren bevorzugten Ausgestaltung ist das Entladesteuersystem dazu ausgebildet nicht benötigte Entladepositionen in einem Entladepositionsspeicher, beispielsweise in Form eines ebenen- oder gassengebundenen automatisierten Regalsystems, zwischenzuspeichern und/ oder für eine Abgabe vorgesehene Entladepositionen zu den Entladelinien zu steuern. Die Anzahl der Entladepositionen und die Effizienz des Entladens der Produkte können so optimiert werden.

Zusammenfassend ist das erfindungsgemäße Hängefördersystem vorteilhaft besonders montagefreundlich, energie- und wartungsarm, ermöglicht eine flexible und raumsparende Gestaltung sowie das Fördern und Sortieren mit hohem Durchsatz.

Weitere vorteilhafte Ausgestaltungen des erfindungsgemäßen Hängefördersystems und des erfindungsgemäßen Verfahrens werden im Folgenden anhand der Figuren näher erläutert.
Fig. 1 zeigt in einer Draufsicht eine schematische Darstellung eines erfindungsgemäßen Hängefördersystems zum Sortieren von Produkten gemäß einer ersten Ausgestaltung.
Fig. 2 zeigt in einer perspektivischen Ansicht von vorne eine schematische Darstellung einer Fördertasche in drei verschiedenen Verfahrensschritten.

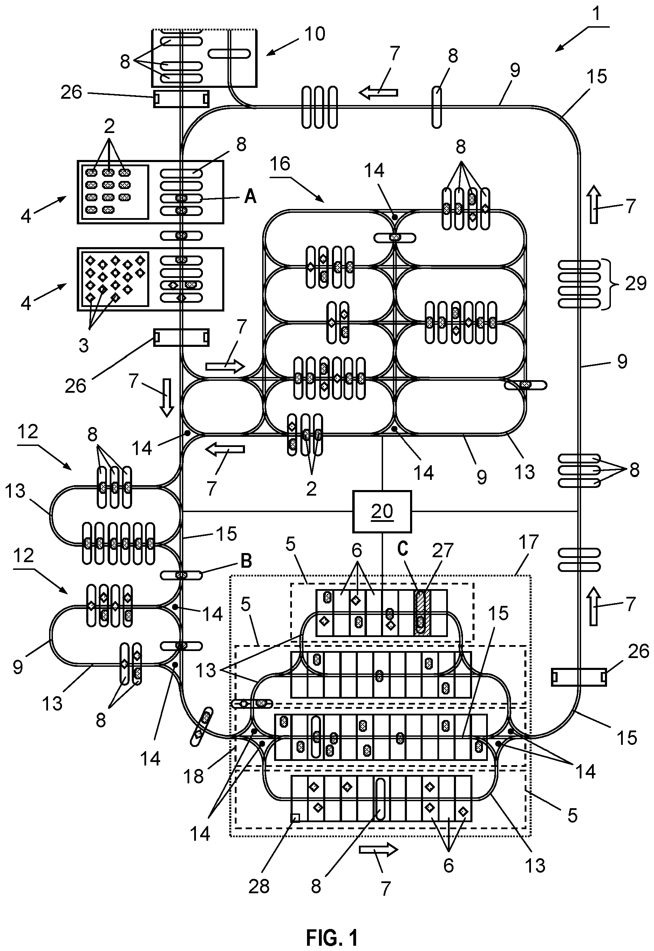

Bezugnehmend auf Figur 1 weist ein Hängefördersystem 1 zum Sortieren von Produkten 2 und 3 zwei Beladequellen 4 und vier Entladelinien 5 mit einer Vielzahl von Entladepositionen 6 auf, die durch einen kontinuierlichen geschlossenen Förderweg 7 miteinander verbunden sind. Eine Vielzahl von Fördertaschen 8 sind in Bezug auf den jeweiligen Förderweg 7, der ihnen von einer Steuereinheit 20 zugeordnet wird, mittels Fördermittel 9 unabhängig voneinander steuerbar und werden entlang dieses Förderwegs 7, der beispielsweise von einer Beladequelle 4 zu einer Entladeposition 6 führen kann, bewegt. Dabei werden sie mit einer Fördergeschwindigkeit bewegt, die einen sehr hohen Durchsatz von bis zu mehreren Zehntausend Fördertaschen 8 pro Stunde ermöglicht. Das Hängefördersystem 1 kann dabei von der Steuereinheit 20 mittels allgemein bekannter und gebräuchlicher Hardware und Software zur Datenverarbeitung, beispielsweise einer Materialflusssoftware, betrieben werden, um ein weiter unten beschriebenes erfindungsgemäßes Verfahren zum Sortieren der Produkte 2, 3 auszuführen.

Alternativ können ein Paar oder mehrere benachbarte Fördertaschen 8 als eine Transporteinheit 29 miteinander verbunden sein und bewegt werden. So kann die Anzahl der zu steuernden Elemente und dadurch die Komplexität des Hängefördersystems 1 reduziert werden.

In der vorliegenden Ausgestaltung wird der kontinuierliche geschlossene Förderweg 7 entlang einer Hauptschleife 15 gegen den Uhrzeigersinn geführt. Vorteilhaft kann der Förderweg 7 gegebenenfalls jeder möglichen Richtung folgen, oder die Richtung auch kurzzeitig oder längerfristig wechseln.

An jeder Beladequelle 4 können die Produkte 2 oder 3, in der vorliegenden Ausgestaltung direkt entlang der Hauptschleife 15, in die Fördertaschen 8 eingebracht werden. Das kann manuell oder vollautomatisch über weitere Fördertechnik geschehen. Dabei kann an jeder Beladequelle 4 genau eine Art von Produkt 2 oder 3 oder mehrere verschiedene Produkte 2 und 3 eingebracht werden. Die Fördertaschen 8 können sich als zuvor entladene, leere Fördertaschen 8 bereits in dem kontinuierlichen geschlossenen Förderweg 7 befinden, oder sie werden, beispielsweise aus einem Fördertaschenlager 10 oder an der Beladequelle 4, zusätzlich manuell oder automatisch in den Förderweg 7 eingebracht.

Beansprucht das Beladen der Fördertaschen 8 mehr Zeit als die Fördergeschwindigkeit zulässt, können die Fördertaschen 8 auch über Beladequellen 4, die nicht direkt an der Hauptschleife 15 liegen und über eine Weiche 14 mit der Hauptschleife 15 verbunden sind (nicht in Figur 1 dargestellt), eingebracht werden. Selbst in diesem Fall jedoch, kann die Fördergeschwindigkeit höher sein als es bei Systemen mit Querbändern oder Kippschalen der Fall ist, da sich die Produkte 2 und 3 beim Einmünden in die Hauptschleife 15 bereits in der Fördertasche 8 befinden, wodurch die Zuordnung selbst bei hoher Fördergeschwindigkeit mit entsprechenden Fliehkräften immer erhalten bleibt.

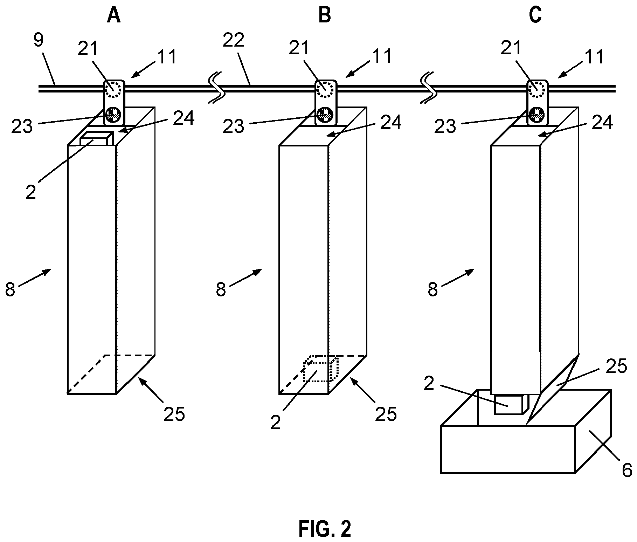

Die Fördermittel 9 sind beispielsweise als Kettenförderer, Klinkenförderer oder Pinförderer ausgebildet und werden über einen Elektromotor (nicht dargestellt) kontinuierlich angetrieben. Die Fördertaschen 8 werden dann beispielsweise an einem Adapter 11, der in Figur 2 dargestellt ist, automatisch von den Fördermitteln 9 mitgenommen, sobald die Fördertaschen 8 in den Förderweg 7 eingebracht sind. Durch die Kompaktheit der Fördertaschen 8 kann der Förderweg 7 vorteilhaft auch als Pufferlager benutzt werden.

Um weitere Pufferkapazität zur Verfügung zu stellen, weist das Hängefördersystem 1 zwei Lagerkarusselle 12 zum Zwischenlagern leerer oder beladener Fördertaschen 8 auf, wobei jedes Lagerkarussell 12 entlang einer Nebenschleife 13 angeordnet ist, die über Weichen 14 von der Hauptschleife 15 abzweigt und in die Hauptschleife 15 einmündet. Diese Lagerkarusselle 12 könne auch zur (Vor-)Sortierung der Produkte 2 und 3 dienen. Die Lagerkarusselle 12 ermöglichen unter anderem, dass ein Produkte 2 oder 3 vorübergehend aus der Hauptschleife 15 entfernt wird, um beispielsweise eine vollständige oder Teil-Blockierung der Hauptschleife 15 zu vermeiden oder, um eine gewisse Produktkategorie vorübergehend aus der Hauptschleife 15 zu entfernen oder aus dem Lagerkarussell 12 in die Hauptschleife 15 einzubringen. In dem gemäß Figur 1 dargestellten Beispiel werden die Fördertaschen 8 vorzugsweise gleichläufig mit dem Förderweg 7 bewegt, wobei sie beispielsweise über die erste Weiche 14 des zugehörigen Lagerkarussells 12 aus der Hauptschleife 15 abgeleitet und über die zweite Weiche 14 des zugehörigen Lagerkarussells 12 in die Hauptschleife 15 eingeleitet werden, wobei sich "erste Weiche 14" und "zweite Weiche 14" darauf beziehen, welche Weiche 14 entlang des Förderweg 7 als erstes und welche Weiche 14 als zweites durchfahren wird. Mögliche Kollisionen mit Fördertaschen 8, die entlang der Hauptschleife 15 bewegt werden, können beispielsweise mittels entsprechender Steuerung der Fördertaschen 8 ausgeschlossen werden. Alternativ kann/können die Nebenschleife/n 13 eines oder aller Lagerkarusselle/s 12 etwas von der Hauptschleife 15 weggerückt ausgebildet sein, gemäß Figur 1 beispielsweise in der Blattebene nach links gerückt, sodass die Nebenschleife/n 13 eine geschlossene und von der Hauptschleife 15 unabhängige Schleife ausbilden, die wiederum über Weichen 14 mit der Hauptschleife 15 verbunden ist. Hierdurch könnten die Fördertaschen 8 entlang der Nebenschleife/n 13 gleichläufig oder gegenläufig mit dem Förderweg 7 bewegt werden, wobei mögliche Kollisionen mit Fördertaschen 8, die entlang der Hauptschleife 15 bewegt werden, von Anfang an ausgeschlossen sind.

Zur weiteren und/ oder besseren (Vor-)Sortierung der Fördertaschen 8 weist das Hängefördersystem 1 einen Matrixsorter 16 auf, der entlang einer Nebenschleife 13 angeordnet ist, die über Weichen 14 von der Hauptschleife 15 abzweigt und in die Hauptschleife 15 einmündet. Der Matrixsorter 16 ermöglicht es, vorzugsweise in Kombination mit einer entsprechenden Softwarelösung, die Produkte 2 und 3 in eine gewünschte Reihenfolge zu bringen. So können beispielsweise Sets oder Bestellungen aus verschiedenen Produkten 2 und 3 gebildet werden und eine etwaige Nachsortierung an der Entladeposition 6 oder später kann entfallen. Im Matrixsorter 16 können die Fördertaschen 8 ausschließlich entlang des Förderwegs 7, also gegen den Uhrzeigersinn, oder alternativ entlang und/ oder entgegen des Förderwegs 7, also im und/ oder gegen den Uhrzeigersinn, bewegt werden. Der Matrixsorter 16 ist vorzugsweise modular aufgebaut und kann an die räumlichen Anforderungen und/ oder an die Systemanforderungen angepasst werden und erweitert werden.

Die Produkte 2 und 3 werden an den Entladepositionen 6, beispielsweise in Kisten oder Kartons, abgegeben. Die Entladepositionen 6 sind in einem Entladebereich 17 entlang von Entladelinien 5 angeordnet. Dabei befindet sich eine erste Entladelinie 18 entlang der Hauptschleife 15, die einen ersten geschlossenen Förderweg 7 darstellt. Drei weitere Entladelinien 5 mit einer Vielzahl von Entladepositionen 6 sind entlang von weiteren geschlossenen Förderwegen 7 angeordnet. Jeder dieser weiteren geschlossenen Förderwege 7 ist als Nebenschleife 13 ausgebildet. Zwei dieser Nebenschleifen 13 zweigen über eine Weiche 14 von der Hauptschleife 15 ab und münden über eine Weiche 14 in die Hauptschleife 15 ein. Die Dritte dieser Nebenschleifen 13 zweigt über eine Weiche 14 von einer der beiden anderen Nebenschleifen 13 ab und mündete über eine Weiche 14 in diese Nebenschleife 13 ein. Die Nebenschleifen 13 sind im Entladebereich 17 im Wesentlichen parallel angeordnet. Im Betriebszustand sind die Fördermittel 9 entlang der Entladelinien 5 und 18 in Bezug auf eine lotrechte vertikale Achse oberhalb der Entladepositionen 6 angeordnet. So kann jedes Produkt 2 und 3 mittels Schwerkraft automatisch und positionsgenau aus der Fördertasche 8 an/ in der/ die gewünschte/n Entladeposition 6 abgegeben/ abgelegt werden. Der Begriff "im Betriebszustand" bedeutet, dass das Hängefördersystem 1 erfindungsgemäß und funktionsbereit aufgebaut und montiert ist, dass also das erfindungsgemäße Verfahren zum Sortieren der Produkte 2, 3 durchführbar ist. Der Begriff "lotrechte vertikale Achse" ist als gerade Linie auszulegen, die senkrecht auf die Erdoberfläche und/oder den Estrich, Boden oder Ähnliches, auf dem sich das Hängefördersystem 1 befindet, steht.

Eine alternative Anordnung der Entladelinien 5 kann jede mögliche Ausbildung aufweisen, beispielsweise ineinandergeschachtelte konzentrische Halbkreise, die jeweils über eine Weiche 14 von der Hauptschleife 15 abzweigen und über eine Weiche 14 in die Hauptschleife 15 einmünden.

Der erfindungsgemäße Entladebereich 17, der in der vorliegenden Ausgestaltung beispielhaft und nicht einschränkend beschrieben ist, ermöglicht vorteilhaft eine besonders flexible und raumsparende Gestaltung der Entladepositionen 6.

Die Fördertaschen 8 sind in Figur 2 näher dargestellt und können im Wesentlichen Fördertaschen ähneln, wie sie aus dem Stand der Technik bekannt sind. Die Fördertaschen 8 sind dabei im Wesentlichen antriebslos ausgebildet und werden mittels der Fördermittel 9 bewegt, welche Fördermittel 9 wiederum von der Steuereinheit 20 gesteuert werden. So können die Anschaffungskosten und der Energieverbrauch gesenkt werden. Ebenso ist hierdurch die Steuerung des Hängefördersystems 1 erheblich vereinfacht, was wiederum die Hardware- und Softwarekosten reduziert.

Jede Fördertasche 8 weist an ihrer Oberseite, also der Seite, die sich in Bezug auf die lotrechte vertikale Achse oben befindet, eine Öffnung 24 auf, durch welche die Produkte 2 und 3 eingebracht werden. Alternativ können die Produkte 2 und 3 durch Öffnungen, Klappen oder dergleichen auf jeder beliebeigen Seite oder Oberfläche der Fördertasche 8 eingebracht werden. Jede Fördertasche 8 weist an ihrer Unterseite, also der Seite, die sich in Bezug auf die lotrechte vertikale Achse unten befindet, eine automatisch verschließ- und öffenbar ausgebildete Klappe 25 auf, durch welche die Produkte 2 und 3 automatisch abgelegt werden.

Jede Fördertasche 8 weist in der dargelegten Ausgestaltung den Adapter 11 mit Roll- oder Gleitkörpern 21 auf, mit deren Hilfe die Fördertasche 8 entlang von Schienen 22 der Fördermittel 9 bewegbar ist. Dabei klinkt sich der Adapter 11 jeweils in einen Antriebsstrang der Fördermittel 9, beispielsweise einen Kettenzug, ein. Die Hauptschleife 15 und die Nebenschleifen 13 weisen jeweils einen separaten Kettenzug auf, der im Kreis entweder im oder gegen den Uhrzeigersinn bewegt wird, je nachdem welche Richtung für den entsprechenden Förderweg 7 gebraucht wird. Im Bereich der Weichen 14 sind nur die Schienen 22 ohne den Kettenzug ausgebildet und die Fördertaschen 8 überbrücken diese Strecke jeweils rollend oder gleitend bis zum nächsten Kettenzug der Hauptschleife 15 oder einer Nebenschleife 13. Ein Gefälle im Bereich der Weichen 14 kann diese Überbrückung unterstützen. Es können weitere, nicht mit einem Antriebsstrang ausgerüstete Bereiche vorhanden sein, welche ebenfalls mit einem Gefälle versehen sein können.

Jeder Adapter 11 weist Identifikationsmittel, insbesondere einen RFID-Chip 23 auf. Der RFID-Chip 23 kann Informationen bezüglich der, in der Transporttasche 8 transportierten Produkte 2 und 3 enthalten. Beispielsweise sind auf dem RFID-Chip 23 die Identifikationsnummer der Transporttasche 8 und/oder die Art und Anzahl der Produkte 2 und 3 und/oder weitere Informationen zu den Produkten 2 und 3 gespeichert. Der RFID-Chip 23 ist insbesondere überschreibbar, so dass der RFID-Chip 23 mehrfach verwendbar ist, oder der RFID-Chip 23 speichert dauerhaft die Identifikationsnummer der Fördertasche 8, wobei die transportierten Produkte 2 und/oder 3 mittels der Steuereinheit 20 der jeweiligen Fördertasche 8 zugeordnet werden. Alternativ können die Identifikationsmittel auch als Barcode, Strichcode oder Ähnliches ausgeführt sein.

Werden die Produkte 2 und 3 im Bereich der Beladequellen 4 identifiziert, beispielsweise über einen Barcode automatisch oder manuell gescannt, oder kennt die Steuereinheit 20 die entsprechenden Produkte 2 und 3 bereits, dann wird diese Information beim Beladen der Fördertaschen 8 auf den RFID-Chip 23 übertragen und/ oder durch die Steuereinheit 20 mit dem RFID-Chip 23, und somit mit der zugehörigen Fördertasche 8, verknüpft. So wird die exakte Entladepositionen 6 der Fördertasche 8 und jedes der Produkte 2 und 3, die mit der Steuereinheit 20 im Zusammenhang mit dem RFID-Chip 23 der jeweiligen Fördertasche 8 gespeichert sind, abgerufen und somit der jeweilige Förderweg 7 jeder Fördertasche 8 und jedes Produkts 2 und 3 sichergestellt. Dieser Förderweg 7 kann dabei über zumindest ein Förderkarussell 12 und/ oder über den Matrixsorter 16 führen. Auch kann dieser Förderweg 7 entlang von zwei Entladelinien 5 über zwei Nebenschleifen 13 führen, wenn beispielsweise mit einer Fördertasche 8 zwei Produkte 2 und 3 an zwei verschiedenen Entladepositionen 6 abgegeben werden. Vorzugsweise wird immer genau ein Produkt 2 oder 3 in einer Fördertasche 8 zu einer Entladeposition 6 transportiert, da hierdurch die Fehlerrate am geringsten ist.

Zusätzlich können entlang des Förderwegs 7 Sensorstationen 26 angeordnet sein, um den Status der Fördertaschen 8 und/ oder der Produkte 2 und 3 anhand der Identifikationsmittel, insbesondere der RFID-Chips 23, zu überprüfen. So kann die Fehlerrate weiter reduziert werden.

Zusätzlich können die Entladepositionen 6 mit Füllstandsensoren 28 ausgestattet sein, welche die aktuelle Anzahl der abgegebenen Produkte 2 und 3 oder den Füllstand der zugehörigen Entladeposition 6 registrieren. Hierdurch können die Produkte 2 und 3 möglichst gleichmäßig auf alle Entladepositionen 6 oder aber sukzessive auf bestimmte Entladepositionen 6 verteilt werden.

Ein erfindungsgemäßes Verfahren zum Sortieren von Produkten 2 und 3 entlang des kontinuierlichen geschlossenen Förderwegs 7 mit einem Hängefördersystem 1, das eine Vielzahl von Fördertaschen 8 für zumindest ein Produkt 2, 3 aufweist, wird folgend an einem spezifischen und nicht einschränkenden Beispiel beschrieben:
In einem ersten Verfahrensschritt wird die Fördertasche 8 an der Beladequelle 4 automatisch mit einem Produkt 2 beladen, wobei die Fördertasche 8 beispielsweise unterhalb eines Beladeroboters (nicht dargestellt) durchgeführt wird. Die Steuereinheit 20 ermittelt die Fördertasche 8 durch Scannen des RFID-Chips 23 und der Beladeroboter legt in dem Moment, in dem die Fördertasche 8 eine Beladeposition der Beladequelle 4 durchfährt, das Produkt 2 ab, das gemäß den Daten der Steuereinheit 20 in die entsprechende Fördertasche 8 abgelegt werden soll. Diese Situation ist in Position "A" in den Figuren 1 und 2 dargestellt. Weiters kennt die Steuereinheit 20 eine entsprechende Entladeposition 27 für das entsprechende Produkt 2 und/ oder die Fördertasche 8, wobei die entsprechende Entladeposition 27 in Figur 1 zum besseren Verständnis schraffiert markiert ist.

In einem zweiten Verfahrensschritt bewegen die Fördermittel 9 die Fördertasche 8 zu der entsprechenden Entladeposition 27, wobei die Steuereinheit 20 die entsprechenden Weichen 14 zum richtigen Zeitpunkt ansteuert. Eine Momentaufnahme dieses Verfahrensschritts, der je nach Förderweg 7 eine gewisse Zeitspanne einnimmt, ist in Position "B" in den Figuren 1 und 2 dargestellt. Dabei muss die Steuereinheit 20 gegebenenfalls im Wesentlichen zu jedem relevanten Zeitpunkt, also beispielsweise, wenn eine der Weichen 14 angesteuert werden muss, die aktuelle Position der Fördertasche 8 kennen. Dies kann mittels der Sensorstationen 26 und/ oder mittels einer festgelegten Reihenfolge mehrerer Fördertaschen 8 geschehen. In dem Entladebereich 17 steuert die Steuereinheit 20 zwei Weichen 14 an, um die Fördertasche 8 zur entsprechenden Entladeposition 27 entlang der Entladelinie 5 der Nebenschleife 13 zu bewegen.

Alternativ können eine Anzahl mehrerer identer Produkte 2 in einer festgelegten Reihenfolge bewegt und gesteuert werden, was den Steueralgorithmus erheblich vereinfachen kann.

Optional kann die Fördertasche 8 vor dem Bewegen zu der Entladeposition 27 auf zumindest eine Zwischenlagerposition der Lagerkarusselle 12 und/ oder zumindest einmal in den Matrixsorter 16 bewegt werden. So kann die Fördertasche 8 mit dem Produkt 2 vorübergehend gelagert oder in eine gewünschte Reihenfolge innerhalb eines Verbunds mehrerer Fördertaschen 8 gebracht werden.

In einem dritten Verfahrensschritt steuert die Steuereinheit 20 die Fördertasche 8 an, das Produkt 2 automatisch und positionsgenau an der entsprechenden Entladeposition 27 der Entladelinie 5 abzulegen. Diese Situation ist in Position "C" in den Figuren 1 und 2 dargestellt. Dabei werden die Fördermittel 9 im Betriebszustand entlang der Entladelinie 5 in Bezug auf die lotrechte vertikale Achse oberhalb der Entladepositionen 6 und 27 geführt, wodurch das Produkt 2 mittels Schwerkraft aus der Fördertasche 8 in die entsprechende Entladeposition 27 abgegeben wird. Die Klappe 25 der Fördertasche 8 kann dabei beispielsweise über einen Auslöser (nicht dargestellt), der von der Steuereinheit 20 zum richtigen Zeitpunkt ausgelöst wird, geöffnet werden. Nach dem Ablegen des Produkts 2 steuert die Steuereinheit 20 in dem Entladebereich 17 zwei weitere Weichen 14 an, um die Fördertasche 8 zurück auf die Hauptschleife 15 bewegen.

In einem weiteren möglichen Verlauf des Verfahrens registriert die Steuereinheit 20 die erfolgreiche Ablage des Produkts 2 und aktualisiert die entsprechende Information der Fördertasche 8, welche nun als "leer" entlang der Hauptschleife 15 geführt wird und somit für den nächsten Transport zur Verfügung steht. Die Fördertasche 8 wird folglich erfindungsgemäß entlang eines kontinuierlichen geschlossenen Förderwegs 7 bewegt, wobei die Fördergeschwindigkeit vorteilhaft zu jedem Zeitpunkt auf einem sehr hohen Niveau beibehalten wird. Die Zuordnung zwischen Fördertasche 8 und Produkt 2 wird dabei zu jedem Zeitpunkt aufrechterhalten.

Ein weiterer Vorteil des erfindungsgemäßen Verfahrens mittels des Hängefördersystems 1 ist die Möglichkeit der Priorisierung. So kann beispielsweise durch das Ansteuern von Entladeposition 6 entlang der Entladelinie 18 der Hauptschleife 15, das Überholen einer oder mehrer Transporttaschen 8, die sich entlang von Entladelinien 5 von Nebenschleifen 13 befinden oder auf Entladepositionen 6 entlang dieser Entladelinien 5 gesteuert werden, durch eine priorisierte Transporttasche 8 ermöglicht werden. Hierdurch können kurzfristig priorisierte Produkte 2 oder 3 beschleunigt entlang der Entladelinie 18 der Hauptschleife 15 abgegeben werden.

Anhand der Figuren 1 und 2 wurde vorangehend eine mögliche Ausgestaltung der Erfindung beschrieben. Erfindungsgemäß kann das Hängefördersystem 1 durch eine Vielzahl möglicher, mehr oder weniger ähnlicher Ausgestaltungen realisiert sein. So können beispielsweise die Anzahl und Form, beispielsweise automatisch oder manuell, der Beladequellen 4 variieren. Weiters können beispielsweise die Anzahl und die Gestaltung des Matrixsortierers 16 und/ oder der Lagerkarusselle 12 variieren. Insbesondere können die Anzahl und die Gestaltung des Entladebereichs 17, der Entladelinien 5, 18 und/ oder der Entladepositionen 6 variieren. Weiters kann die Ausgestaltung der Fördertaschen 8 variieren, wobei diese beispielsweise flexibel oder starr ausgebildet sein können. Alle möglichen derartigen Abweichungen sind anhand der vorangehend beschriebenen Ausgestaltung abgedeckt, da ein Fachmann des Standes der Technik diese Abweichungen kennt und fähig ist, diese zu implizieren.

Das erfindungsgemäße Hängefördersystem 1 und das erfindungsgemäße Verfahren kann zum Sortieren von beispielsweise folgenden Produkten 2 und 3 verwendet werden: pulverförmige, fein-, grob- oder einstückige Rohstoffe, Halbzeuge, und verpackte oder unverpackte Artikel aller Art, insbesondere Textilien, Pakete, Päckchen, Briefe oder Ähnliches. Der Begriff "Sortieren" beinhaltet diesbezüglich sinngemäß ebenfalls "Transportieren", "(Um)verteilen", "(Re)organisieren", "Kategorisieren", "in eine gewünschte oder zufällige Reihenfolge bringen" oder Ähnliches. Ebenso können Kleider aller Art auf Kleiderbügeln in die Adapter 11 eingehängt werden.

Eine beispielhafte Anwendung des erfindungsgemäßen Hängefördersystems 1 und des erfindungsgemäßen Verfahrens ist das Sortieren von Paketen, Päckchen und Briefen in einem Postverteilerzentrum oder einem Paketverteilerzentrum.

## Patentansprüche

1. Hängefördersystem (1) zum Sortieren von Produkten, aufweisend eine Vielzahl von Fördertaschen (8) für zumindest ein Produkt (2, 3), wobei die Fördertaschen (8) entlang eines kontinuierlichen geschlossenen Förderwegs (7) bewegbar sind, wobei das Hängefördersystem (1) aufweist:
- Fördermittel (9), die zum Bewegen der Fördertaschen (8) ausgebildet sind,
- zumindest eine Beladequelle (4), die zum Beladen der Fördertaschen (8) mit dem zumindest einen Produkt (2, 3) ausgebildet ist,
- eine Steuereinheit (20), die zum Steuern der Fördermittel (9) ausgebildet ist,
- zumindest eine erste Entladelinie (18) mit einer Vielzahl von Entladepositionen (6) entlang eines ersten geschlossenen Förderwegs (7);
**gekennzeichnet durch** zumindest eine weitere Entladelinie (5) mit einer Vielzahl von Entladepositionen (6), die entlang zumindest eines weiteren geschlossenen Förderwegs (7) angeordnet ist, wobei die zumindest zwei geschlossenen Förderwege (7) über zumindest zwei Weichen (14) miteinander verbunden sind, wobei die Fördertaschen (8) in Bezug auf den Förderweg (7) mittels der Fördermittel (9) unabhängig voneinander steuerbar sind.

2. Hängefördersystem (1) gemäß Anspruch 1, **dadurch gekennzeichnet, dass** der erste geschlossene Förderweg (7) als Hauptschleife (15) ausgebildet ist und dass jeder weitere geschlossene Förderweg (7) als Nebenschleife (13) ausgebildet ist, wobei die Nebenschleife (13) über eine Weiche (14) von der Hauptschleife (15) abzweigt und über eine Weiche (14) in die Hauptschleife (15) einmündet.

3. Hängefördersystem (1) gemäß Anspruch 2, **dadurch gekennzeichnet, dass** zumindest zwei weitere, vorzugsweise im Wesentlichen parallel zueinander angeordnete, Entladelinien (5) entlang geschlossener Förderwege (7) als Nebenschleifen (13) ausgebildet sind, wobei zumindest eine Nebenschleife (13) über eine Weiche (14) von einer anderen Nebenschleife (13) abzweigt und über eine Weiche (14) in diese Nebenschleife (13) einmündet.

4. Hängefördersystem (1) gemäß einem der Ansprüche 1 bis 3, **dadurch gekennzeichnet, dass** jede Fördertasche (8) Identifikationsmittel, insbesondere einen RFID-Chip (23), aufweist.

5. Hängefördersystem (1) gemäß einem der Ansprüche 1 bis 4, **dadurch gekennzeichnet, dass** das Hängefördersystem (1) zumindest ein Lagerkarussell (12) zum Zwischenlagern leerer oder beladener Fördertaschen (8) aufweist.

6. Hängefördersystem (1) gemäß einem der Ansprüche 1 bis 5, **dadurch gekennzeichnet, dass** das Hängefördersystem (1) zumindest einen Matrixsorter (16) zum Sortieren der Fördertaschen (8) in eine gewünschte Reihenfolge aufweist.

7. Hängefördersystem (1) gemäß Anspruch 5 oder 6, **dadurch gekennzeichnet, dass** das Lagerkarussell (12) entlang einer Nebenschleife (13) angeordnet ist und/ oder dass der Matrixsorter (16) entlang einer Nebenschleife (13) angeordnet ist, wobei jede Nebenschleife (13) über Weichen (14) von der Hauptschleife (15) oder einer Nebenschleife (13) abzweigt und in die Hauptschleife (15) oder die Nebenschleife (13) einmündet.

8. Hängefördersystem (1) gemäß einem der Ansprüche 1 bis 7, **dadurch gekennzeichnet, dass** im Betriebszustand die Fördermittel (9) im Bereich jeder Beladequelle (4) in Bezug auf die vertikale Achse unterhalb zumindest einer Beladeposition angeordnet sind, wodurch jedes Produkt (2, 3) mittels Schwerkraft automatisch oder manuell und positionsgenau in eine beliebige gewünschte Fördertasche (8) abgebbar ist.

9. Hängefördersystem (1) gemäß einem der Ansprüche 1 bis 8, **dadurch gekennzeichnet, dass** die Fördertaschen (8) automatisch verschließ- und öffenbar ausgebildet sind.

10. Hängefördersystem (1) gemäß Anspruch 9, **dadurch gekennzeichnet, dass** in einem Betriebszustand die Fördermittel (9) entlang der Entladelinien (5, 18) in Bezug auf eine vertikale Achse oberhalb der Entladepositionen (6) angeordnet sind, wodurch jedes Produkt (2, 3) mittels Schwerkraft automatisch und positionsgenau aus der Fördertasche (8) in eine beliebige gewünschte Entladeposition (27) abgebbar ist.

11. Hängefördersystem (1) gemäß Anspruch 10, **dadurch gekennzeichnet, dass** die Entladepositionen (6, 27) in den Entladelinien (5, 18) als Rampen oder Rutschen ausgebildet sind.

12. Hängefördersystem (1) gemäß Anspruch 10, **dadurch gekennzeichnet, dass** die Entladepositionen (6, 27) in den Entladelinien (5, 18) beweglich, vorzugsweise als Behälter ausgebildet sind.

13. Hängefördersystem (1) gemäß Anspruch 12, **dadurch gekennzeichnet, dass** ein Entladesteuersystem vorgesehen ist, das dazu ausgebildet ist die beweglichen Entladepositionen (6, 27) unterhalb der Entladelinien (5, 18) zu positionieren und/ oder mittels einem Entladepositionsfördermittel, insbesondere einem Förderband, zu bewegen.

14. Hängefördersystem (1) gemäß Anspruch 13, **dadurch gekennzeichnet, dass** das Hängefördersystem (1) zum Abgeben der Produkte (2, 3) aus der Fördertasche (8) mittels Schwerkraft in sich bewegende Entladepositionen (6, 27) ausgebildet ist, wobei die Bewegungsrichtung der Entladepositionen (6, 27) vorzugsweise gleichläufig oder gegenläufig mit dem Förderweg (7) der Entladelinien (5, 18) ist.

15. Hängefördersystem (1) gemäß Anspruch 13 oder 14, **dadurch gekennzeichnet, dass** das Entladesteuersystem dazu ausgebildet ist nicht benötigte Entladepositionen (6) in einem Entladepositionsspeicher, vorzugsweise in Form eines ebenen- oder gassengebundenen automatisierten Regalsystems, zwischenzuspeichern und/ oder für eine Abgabe vorgesehene Entladepositionen (27) zu den Entladelinien (5, 18) zu steuern.

16. Verfahren zum Sortieren von Produkten entlang eines kontinuierlichen geschlossenen Förderwegs (7) mit einem Hängefördersystem (1), das eine Vielzahl von Fördertaschen (8) für zumindest ein Produkt (2, 3) aufweist, bei dem die folgenden Verfahrensschritte durchgeführt werden:
A) Automatisches oder manuelles Beladen einer Fördertasche (8) mit zumindest einem Produkt an einer Beladequelle (4);
B) Bewegen der Fördertasche (8) mittels Fördermittel (9) und Ansteuern zumindest einer gewünschten Entladeposition (27) mittels einer Steuereinheit (20), wobei die Entladeposition (27) entlang einer Entladelinie (5) angeordnet ist;
C) Ablegen des zumindest einen Produkts (2, 3) an der gewünschten Entladeposition (27),
**dadurch gekennzeichnet, dass**
die Entladelinie (5) entlang eines geschlossenen Förderwegs (7) angeordnet ist, der über zumindest zwei Weichen (14) führt, wobei die Fördertasche (8) über die zumindest zwei Weichen (14) bewegt wird und in einem Betriebszustand die Fördertasche (8) entlang der Entladelinie (5) in Bezug auf eine vertikale Achse positionsgenau über die gewünschte Entladeposition (27) gesteuert wird und das Produkt (2, 3) automatisch und mittels Schwerkraft aus der Fördertasche (8) in die gewünschte Entladeposition (27) abgegeben wird.

17. Verfahren gemäß Anspruch 16, **dadurch gekennzeichnet, dass** die Fördertasche (8) vor dem Bewegen zu der gewünschten Entladeposition (27) auf zumindest eine Zwischenlagerposition eines Lagerkarussells (12) bewegt wird.

18. Verfahren gemäß Anspruch 16 oder 17, **dadurch gekennzeichnet, dass** die Fördertasche (8) vor dem Bewegen zu der gewünschten Entladeposition (27) zumindest einmal in einen Matrixsorter (16) bewegt wird.

19. Verfahren gemäß einem der Ansprüche 16 bis 18, **dadurch gekennzeichnet, dass** die Entladepositionen (27) beweglich ausgebildet sind, wobei für eine Abgabe vorgesehene bewegliche Entladepositionen (27) mittels einem Entladesteuersystem zu den Entladelinien (5, 18) gesteuert und/ oder nicht benötigte Entladepositionen (6) in einem Entladepositionsspeicher zwischengespeichert werden.

## Claims

1. Overhead conveyor system (1) for sorting products, comprising a plurality of conveyor pockets (8) for at least one product (2, 3), wherein the conveyor pockets (8) are movable along a continuous closed conveyor path (7), wherein the overhead conveyor system (1) comprises:
- Conveyor means (9), which are designed to move the conveyor pockets (8),
- at least one loading source (4), which is designed to load the conveyor pockets (8) with the at least one product (2, 3),
- a control unit (20) which is designed to control the conveying means (9),
- at least one first unloading line (18) with a plurality of unloading positions (6) along a first closed conveyor path (7);
**characterised by** at least one further unloading line (5) with a plurality of unloading positions (6), which is arranged along at least one further closed conveyor path (7), wherein the at least two closed conveyor paths (7) are connected to one another via at least two switches (14), wherein the conveyor pockets (8) can be controlled independently of one another in relation to the conveyor path (7) by means of the conveyor means (9).

2. Overhead conveyor system (1) according to claim 1, **characterised in that** the first closed conveyor path (7) is designed as a main loop (15) and **in that** each further closed conveyor path (7) is designed as a secondary loop (13), the secondary loop (13) branching off from the main loop (15) via a switch (14) and opening into the main loop (15) via a switch (14).

3. Overhead conveyor system (1) according to claim 2, **characterised in that** at least two further unloading lines (5), preferably arranged substantially parallel to one another, are formed as secondary loops (13) along closed conveyor paths (7), at least one secondary loop (13) branching off from another secondary loop (13) via a switch (14) and opening into this secondary loop (13) via a switch (14).

4. Overhead conveyor system (1) according to one of claims 1 to 3, **characterised in that** each conveyor pocket (8) has identification means, in particular an RFID chip (23).

5. Overhead conveyor system (1) according to one of claims 1 to 4, **characterised in that** the overhead conveyor system (1) has at least one storage carousel (12) for the intermediate storage of empty or loaded conveyor pockets (8).

6. Overhead conveyor system (1) according to one of claims 1 to 5, **characterised in that** the overhead conveyor system (1) has at least one matrix sorter (16) for sorting the conveyor pockets (8) into a desired sequence.

7. Overhead conveyor system (1) according to claim 5 or 6, **characterised in that** the storage carousel (12) is arranged along a secondary loop (13) and/or **in that** the matrix sorter (16) is arranged along a secondary loop (13), each secondary loop (13) branching off from the main loop (15) or a secondary loop (13) via switches (14) and opening into the main loop (15) or the secondary loop (13).

8. Overhead conveyor system (1) according to one of claims 1 to 7, **characterised in that**, in the operating state, the conveyor means (9) are arranged in the region of each loading source (4) below at least one loading position with respect to the vertical axis, whereby each product (2, 3) can be deposited automatically or manually and in the exact position into any desired conveyor pocket (8) by means of gravity.

9. Overhead conveyor system (1) according to one of claims 1 to 8, **characterised in that** the conveyor pockets (8) are designed to be automatically closable and openable.

10. Overhead conveyor system (1) according to claim 9, **characterised in that** in one operating state the conveyor means (9) are arranged along the unloading lines (5, 18) in relation to a vertical axis above the unloading positions (6), whereby each product (2, 3) can be discharged automatically and accurately from the conveyor pocket (8) into any desired unloading position (27) by means of gravity.

11. Overhead conveyor system (1) according to claim 10, **characterised in that** the unloading positions (6, 27) in the unloading lines (5, 18) are designed as ramps or chutes.

12. Overhead conveyor system (1) according to claim 10, **characterised in that** the unloading positions (6, 27) in the unloading lines (5, 18) are movable, preferably designed as containers.

13. Overhead conveyor system (1) according to claim 12, **characterised in that** an unloading control system is provided which is designed to position the movable unloading positions (6, 27) below the unloading lines (5, 18) and/or to move them by means of an unloading position conveyor means, in particular a conveyor belt.

14. Overhead conveyor system (1) according to claim 13, **characterised in that** the overhead conveyor system (1) is designed for discharging the products (2, 3) from the conveyor pocket (8) by means of gravity into moving unloading positions (6, 27), the direction of movement of the unloading positions (6, 27) preferably being in the same or opposite direction to the conveying path (7) of the unloading lines (5, 18).

15. Overhead conveyor system (1) according to claim 13 or 14, **characterised in that** the unloading control system is designed to temporarily store unloading positions (6) which are not required in an unloading position store, preferably in the form of a level- or aisle-bound automated rack system, and/or to control unloading positions (27) intended for delivery to the unloading lines (5, 18).

16. Method for sorting products along a continuous closed conveyor path (7) with an overhead conveyor system (1) having a plurality of conveyor pockets (8) for at least one product (2, 3), in which the following method steps are carried out:
A) Automatic or manual loading of a conveyor pocket (8) with at least one product at a loading source (4);
B) Moving the conveyor pocket (8) by means of conveying means (9) and activating at least one desired unloading position (27) by means of a control unit (20), the unloading position (27) being arranged along an unloading line (5);
C) Depositing the at least one product (2, 3) at the desired unloading position (27),
**characterised in that**
the unloading line (5) is arranged along a closed conveyor path (7) which leads over at least two switches (14), the conveyor pocket (8) being moved over the at least two switches (14) and, in an operating state, the conveyor pocket (8) being controlled along the unloading line (5) with positional accuracy with respect to a vertical axis over the desired unloading position (27) and the product (2, 3) being discharged automatically and by means of gravity from the conveyor pocket (8) into the desired unloading position (27).

17. Method according to claim 16, **characterised in that** the conveyor pocket (8) is moved to at least one intermediate storage position of a storage carousel (12) before being moved to the desired unloading position (27).

18. Method according to claim 16 or 17, **characterised in that** the conveyor pocket (8) is moved at least once into a matrix sorter (16) before being moved to the desired unloading position (27).

19. Method according to one of claims 16 to 18, **characterised in that** the unloading positions (27) are designed to be movable, wherein movable unloading positions (27) provided for a discharge are controlled by means of an unloading control system to the unloading lines (5, 18) and/or unloading positions (6) which are not required are temporarily stored in an unloading position memory.

## Revendications

1. Convoyeur aérien (1) pour le tri de produits, comprenant une multitude de poches de convoyage (8) pour au moins un produit (2, 3), lesquelles poches de convoyage (8) peuvent se déplacer le long d'un chemin de convoyage continu fermé, ce convoyeur aérien (1) comportant
- des moyens de convoyage (9) qui sont configurés pour le déplacement des poches de convoyage (8),
- au moins une source de chargement (4) qui est configurée pour le chargement des poches de convoyage (8) avec l'au moins un produit (2, 3),
- une unité de commande (20) qui est configurée pour la commande des moyens de convoyage (9) et
- au moins une première ligne de déchargement (18) avec une multitude de positions de déchargement (6) le long d'un premier chemin de convoyage fermé (7),
**caractérisé par** au moins une autre ligne de déchargement (5) avec une multitude de positions de déchargement (6) qui sont disposées le long d'au moins un autre chemin de convoyage fermé (7), les au moins deux chemins de convoyage fermés (7) étant reliés entre eux par au moins deux aiguillages (14), les poches de convoyage (8) pouvant être commandées indépendamment les unes des autres en ce qui concerne le chemin de convoyage (7), à l'aide des moyens de convoyage (9).

2. Convoyeur aérien (1) selon la revendication 1, **caractérisé en ce que** le premier chemin de convoyage fermé (7) est configuré comme boucle principale (15) et que tout autre chemin de convoyage fermé (7) est configuré comme boucle auxiliaire (13), cette boucle auxiliaire (13) bifurquant de la boucle principale (15) par un aiguillage (14) et débouchant dans la boucle principale (15) par un aiguillage (14).

3. Convoyeur aérien (1) selon la revendication 2, **caractérisé en ce qu'**au moins deux autres lignes de déchargement (5), de préférence disposées sensiblement parallèlement entre elles, sont configurées comme des boucles auxiliaires (13) le long des chemins de convoyage fermés (7), au moins une boucle auxiliaire (13) bifurquant d'une autre boucle auxiliaire (13) par un aiguillage (14) et débouchant dans cette boucle auxiliaire (13) par un aiguillage (14).

4. Convoyeur aérien (1) selon une des revendications 1 à 3, **caractérisé en ce que** chaque poche de convoyage (8) comporte des moyens d'identification, en particulier une puce RFID (23).

5. Convoyeur aérien (1) selon une des revendications 1 à 4, **caractérisé en ce que** ce convoyeur aérien (1) comprend au moins un carrousel de stockage (12) pour le stockage intermédiaire des poches de convoyage (8) vides ou pleines.

6. Convoyeur aérien (1) selon une des revendications 1 à 5, **caractérisé en ce que** ce convoyeur aérien (1) comprend au moins une trieuse matricielle (16) pour le tri des poches de convoyage (8) dans un ordre souhaité.

7. Convoyeur aérien (1) selon la revendication 5 ou 6, **caractérisé en ce que** le carrousel de stockage (12) est agencé le long d'une boucle auxiliaire (13) et/ou que la trieuse matricielle (16) est agencée le long d'une boucle auxiliaire (13), chaque boucle auxiliaire (13) bifurquant de la boucle principale (15) ou d'une boucle auxiliaire (13) et débouchant dans la boucle principale (15) ou d'une boucle auxiliaire (13) par un aiguillage (14).

8. Convoyeur aérien (1) selon une des revendications 1 à 7, **caractérisé en ce qu'**en mode de fonctionnement, les moyens de convoyage (9) dans la zone de chaque source de chargement (4) sont disposés au-dessous d'au moins une position de chargement par rapport à l'axe vertical, de sorte que chaque produit (2, 3) peut être déposé, par le biais de la force de gravité, automatiquement ou manuellement et avec exactitude dans une poche de convoyage (8) souhaitée quelle qu'elle soit.

9. Convoyeur aérien (1) selon une des revendications 1 à 8, **caractérisé en ce que** les poches de convoyage (8) sont configurées de façon à pouvoir être fermées et ouvertes automatiquement.

10. Convoyeur aérien (1) selon la revendication 9, **caractérisé en ce que**, dans un mode de fonctionnement, les moyens de convoyage (9) le long des lignes de déchargement (5, 18) sont disposés au-dessus des positions de chargement (6) par rapport à un axe vertical, de sorte que chaque produit (2, 3) peut être déposé, par le biais de la force de gravité, automatiquement et avec exactitude depuis la poche de convoyage (8) dans une position de déchargement (27) souhaitée quelconque.

11. Convoyeur aérien (1) selon la revendication 10, **caractérisé en ce que** les positions de déchargement (6, 27) dans les lignes de déchargement (5, 18) sont configurées comme des pentes ou des rampes.

12. Convoyeur aérien (1) selon la revendication 10, **caractérisé en ce que** les positions de déchargement (6, 27) dans les lignes de déchargement (5, 18) sont configurées de façon mobile, de préférence comme des conteneurs.

13. Convoyeur aérien (1) selon la revendication 12, **caractérisé en ce qu'**il est prévu un système de commande de déchargement qui est conçu pour positionner les positions de déchargement (6, 27) au-dessous des lignes de déchargement (5, 18) et/ou pour les déplacer à l'aide d'un moyen de convoyage de positions de déchargement, en particulier d'une bande transporteuse.

14. Convoyeur aérien (1) selon la revendication 13, **caractérisé en ce que** ce convoyeur aérien (1) est conçu pour déposer, par le biais de la force de gravité, les produits (2, 3) depuis la poche de convoyage (8) dans les positions de déchargement (6, 27) en déplacement, la direction de déplacement des positions de déchargement (6, 27) étant de préférence identique ou opposée au chemin de convoyage (7) des lignes de déchargement (5, 18).

15. Convoyeur aérien (1) selon la revendication 13 ou 14, **caractérisé en ce que** le système de commande de déchargement est conçu pour stocker temporairement les positions de déchargement (6) non utilisées dans un réservoir de positions de déchargement, de préférence sous la forme d'un système de desserte de rayonnages entre plusieurs niveaux ou allées, et/ou pour diriger des positions de déchargement (27) prévues pour un dépôt vers les lignes de déchargement (5, 18).

16. Procédé pour le tri de produits le long d'un chemin de convoyage fermé continu (7) avec un convoyeur aérien (1) qui comprend une multitude de poches de convoyage (8) pour au moins un produit (2, 3), selon lequel les étapes de procédé suivantes sont exécutées :
A) chargement automatique ou manuel d'une poche de convoyage (8) avec au moins un produit à une source de chargement (4),
B) déplacement de la poche de convoyage (8) à l'aide de moyens de convoyage (9) et contrôle d'au moins une position de déchargement (27) souhaitée à l'aide d'une unité de commande (20), laquelle position de déchargement (27) est disposée le long d'une ligne de déchargement, et
C) dépôt de l'au moins un produit (2, 3) dans la position de déchargement (27) souhaitée,
**caractérisé en ce que**
la ligne de déchargement (5) est disposée le long d'un chemin de convoyage fermé (7) qui passe par au moins deux aiguillages (14), la poche de convoyage (8) étant déplacée à travers les au moins deux aiguillages (14) et, dans un mode de fonctionnement, la poche de convoyage (8) étant conduite avec exactitude le long de la ligne de déchargement (5) au-dessus de la position de déchargement (27) souhaitée par rapport à un axe vertical et le produit (2, 3) étant déposé automatiquement et par le biais de la force de gravité depuis la poche de convoyage (8) dans la position de déchargement (27) souhaitée.

17. Procédé selon la revendication 16, **caractérisé en ce qu'**avant le déplacement vers la position de déchargement (27) souhaitée, la poche de convoyage (8) est déplacée sur au moins une position de stockage intermédiaire d'un carrousel de stockage (12).

18. Procédé selon la revendication 16 ou 17, **caractérisé en ce qu'**avant le déplacement vers la position de déchargement (27) souhaitée, la poche de convoyage (8) est déplacée au moins une fois dans une trieuse matricielle (16).

19. Procédé selon une des revendications 16 à 18, **caractérisé en ce que** les positions de déchargement (27) sont configurées de façon mobile, les positions de déchargement mobiles (27) prévues pour un dépôt étant dirigées vers les lignes de déchargement (5, 18) au moyen d'un système de commande de déchargement et/ou les positions de déchargement non utilisées (6) étant stockées temporairement dans un réservoir de positions de déchargement.
